# EUROPÄISCHE PATENTSCHRIFT

(11) **EP 0 818 348 B1**
(45) Veröffentlichungstag und Bekanntmachung des Hinweises auf die Patenterteilung: **05.10.2005**
(21) Anmeldenummer: 97111791.6
(22) Anmeldetag: 11.07.1997
(51) Int. Cl.: B60P 1/00, B62D 33/04

(54) **Kofferaubau für Lastkraftwagen mit Zwischenboden**
Fright compartment for lorries comprising an intermediate floor
Caisse pour camion comprenant un plancher intermédiaire

(30) Priorität: 12.07.1996 DE 29612099 U
(43) Veröffentlichungstag der Anmeldung: 14.01.1998
(73) Patentinhaber: Spier Verwaltungs GmbH & Co.KG, 32839 Steinheim (DE)
(72) Erfinder: Spier, Willi, 32839 Steinheim (DE)
(74) Vertreter: Hanewinkel, Lorenz

(56) Entgegenhaltungen:
- AT-B- 372 343
- GB-A- 2 253 377
- US-A- 3 891 102

## Beschreibung

Die Erfindung betrifft einen Kofferaufbau für einen Lastkraftwagen mit einem Zwischenboden, gebildet durch zwei Reihen aus jeweils mehreren Bodenelementen, die um eine horizontale Schwenkachse an der der jeweiligen Reihe benachbarten Seitenwand des Kofferaufbaus aus einer vertikalen, an der Seitenwand anliegenden Nichtgebrauchsstellung in eine horizontale Nutzstellung schwenkbar sind, in der sie sich einerseits mit jeweils einer ausklappbaren Stütze auf dem Boden des Kofferaufbaus und andererseits gegeneinander lagefixiert abstützen.

Aus der Patentschrift US-A-3 891 102 ist bekannt, in dem Kofferaufbau eines Lastkraftwagens Zwischenebenen zu bilden, auf denen Container mit Rädern in Schienen geführt gehalten sind, welche in eine Nutzstellung und in eine abgeklappte Stellung zu bringen sind. Die gebildeten Zwischenebenen sind für andere Behältnisse als Container mit Rädern kaum geeignet. Auch ist ein aufwendiger Klappmechanismus erforderlich, um die notwendige Stabilität in den jeweiligen Zwischenboden zu bringen. Bei Nichtgebrauch werden die Elemente des Zwischenbodens nach unten geklappt, wo sie die Beladung des Fahrzeugs beeinträchtigen.

Aufgabe der Erfindung ist es, einen Kofferaufbau mit einem allgemein nutzbaren Zwischenboden zu schaffen, der aus einfachen, kostengünstig herstellbaren und in sich stabilen Bauteilen besteht, der einerseits bei leichter Handhabung in eine stabile horizontale Nutzstellung mit Abstand zum Kofferaufbauboden zur Bildung zweier unterschiedlich großer und übereinander liegender Stauräume bringbar ist, und der in der Nichtgebrauchsstellung den Innenraum des Kofferaufbaus nicht merklich beeinträchtigt.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Der Zwischenboden des Kofferaufbaus gemäß der Erfindung setzt sich aus einfach aufgebauten, kostengünstig herstellbaren und stabil ausgeführten Bauteilen zusammen, die in einfacher und schneller Weise in eine horizontale Nutzstellung als Zwischenboden mit Abstand oberhalb des Kofferaufbaubodens bringbar sind und dabei zwei unterschiedlich große, übereinander liegende Stauräume ergeben. Der Zwischenboden setzt sich in vorteilhafter Weise aus zwei Reihen aus mehreren aneinandergereihten, vorzugsweise gleichgroßen, Bodenelementen zusammen, wobei jede Reihe mit ihren Bodenelementen durch eine Schwenklagerung an einer Seitenwand des Kofferaufbaus höhenverschwenkbar gelagert ist und durch ausklappbare Stützen in Form von Beinen in der horizontalen Nutzstellung gegenüber dem Boden des Kofferaufbaus abgestützt ist.

Dabei ist für jedes Bodenelement eine Stütze vorgesehen, die in einem Endbereich des Bodenelementes an dem Rand zur benachbarten Bodenelementreihe steht, und die zweite Abstützung des Bodenelementes folgt an dem anderen Rand, indem das Bodenelement mit einer Greifklaue seines Einfassprofiles über ein herausstehendes Achsenteil der Schwenkachse für die Stütze greift, wodurch praktisch jedes Bodenelement einerseits durch die Schwenklagerung an der Kofferaufbauseitenwand und andererseits im Mittenbereich des Kofferaufbaus durch die Beinstütze und in die gegenseitige Bodenelementabstützung getragen wird.

Die Bodenelemente bestehen aus Plywoodplatten und sind mit einem vorzugsweise metallischen Einfaßprofil ausgestattet.

Der gesamte Zwischenboden setzt sich in vorteilhafter Weise aus gleichgroßen Bodenelementen mit quadratischer oder rechteckiger Grundform zusammen und beinhaltet insgesamt wenige unterschiedliche Bauteile.

Die Erstellung des Zwischenbodens sowie die Bewegung des Zwischenbodens in die Nichtgebrauchsstellung erfolgt durch Verschwenken der einzelnen Bodenelemente nacheinander und ist in kurzer Zeit durchführbar.

Durch diesen Zwischenboden wird einerseits ein großer Stauraum, d. h. der gesamte Raum des Kofferaufbaus zur Nutzung freigegeben und zum anderen der Innenraum des Kofferaufbaus in zwei Stauräume unterteilt, die dann ein gut zugängliches und unterschiedliches Bestücken des Kofferaufbaus mit Transportgütern bei sehr guter Übersichtlichkeit ergeben.

Dieser Zwischenboden ist als Bausatz ausgeführt und läßt sich in Kofferaufbauten von Lastkraftwagen nachrüsten.

Auf den Zeichnungen ist ein Ausführungsbeispiel der Erfindung dargestellt, welches nachfolgend näher erläutert wird. Es zeigen:

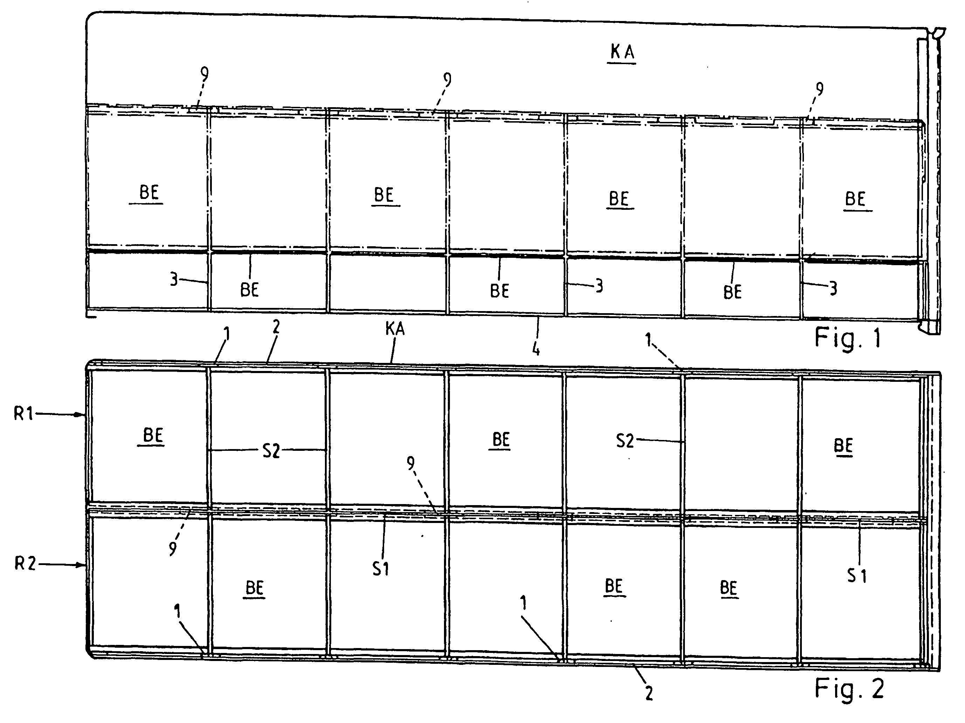

- Fig. 1: eine schematische Seitenansicht eines Kofferaufbaus mit aus höhenverschwenkbaren Bodenelementen gebildetem Zwischenboden -in vollen Linien in horizontaler Nutzstellung und -in strichpunktierten Linien in hochgeschwenkter Nichtgebrauchsstellung-,
- Fig. 2: eine schematische Draufsicht auf den Kofferaufbau mit aus zwei Reihen an Bodenelementen gebildetem Zwischenboden,
- Fig. 3: eine schematische Stirnansicht des Kofferaufbaus mit Zwischenboden und dessen Bodenelemente abstützenden, klappbaren Stützen,
- Fig. 4: eine Stirnansicht zweier in die horizontale Nutzstellung geschwenkter und von Stützen getragenen Bodenelementen,
- Fig. 5: eine Stirnansicht eines an die Kofferaufbau-Seitenwand hochgeschwenkten Bodenelementes mit eingeklappter Stütze,
- Fig. 6: eine Stirnansicht des hochgeschwenkten Einfaßprofilendes des Bodenelementes,
- Fig. 7: eine Stirnansicht des in die Horizontale heruntergeschwenkten und mit seinem Einfaßprofil auf der Schwenkachse der Stütze des benachbarten Bodenelementes abgestützten Bodenelementendes,
- Fig. 8 und 9: eine Vorderansicht und eine Draufsicht auf benachbarte Bodenelemente mit Stütze und Schwenkachse.

Der Zwischenboden in Kofferaufbauten (KA) von Lastkraftwagen weist zwei Reihen (R1, R2) aus jeweils mehreren, um eine horizontale Schwenkachse (1) an der der jeweiligen Reihe (R1, R2) benachbarten Seitenwand (2) des Kofferaufbaus (KA) aus einer vertikalen, an der Kofferaufbau-Seitenwand (2) anliegenden Nichtgebrauchsstellung in eine horizontale Nutzstellung höhenverschwenkbar gelagerten Bodenelementen (BE) auf, welche in der horizontalen Nutzstellung sich einerseits mit jeweils einer ausklappbaren Stütze (3) auf dem Boden (4) des Kofferaufbaus (KA) und andererseits gegeneinander lagefixiert abstützen.

Die Bodenelemente (BE) sind von Plywoodplatten (Sperrholzplatten) mit quadratischer oder rechteckiger Grundform und umlaufendem Einfaßprofil (5) gebildet.

Die beiden Bodenelementreihen (R1, R2) liegen in der horizontalen Nutzstellung auf der Längenmitte des Kofferaufbaus (KA) mit Spalt (S1) zueinander und die Bodenelemente (BE) sind in jeder Reihe (R1, R2) mit Spalt (S2) aneinandergereiht.

Alle Bodenelemente (BE) haben gleiche Grundform und Größe.

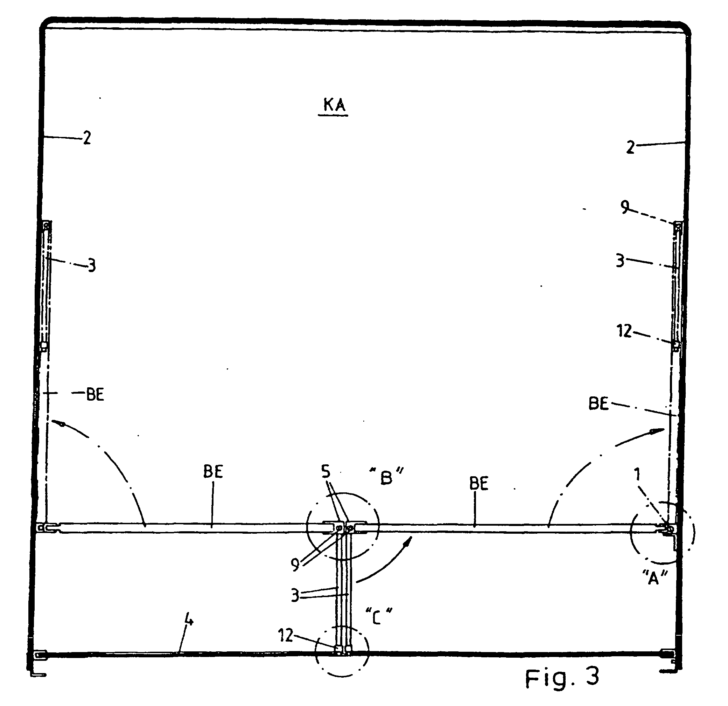

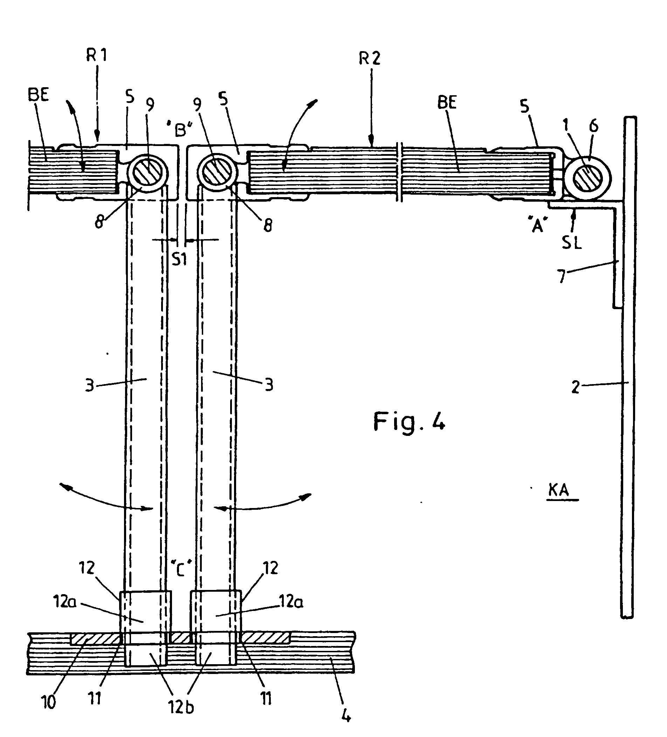

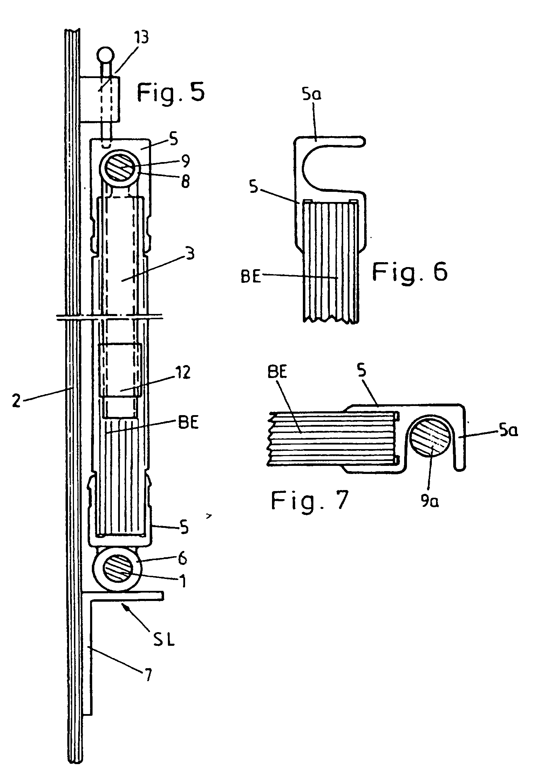

An dem Einfaßprofil (5) der Bodenelemente (BE) und der Seitenwand (2) des Kofferaufbaus (KA) sind Schwenklagerungen (SL) aus der horizontalen Schwenkachse (1), aus Lageraugen (6) und Tragwinkeln (7) für die Höhenverschwenkung der Bodenelemente (BE) festgelegt, wie Fig. 4 und 5 gemäß Ausschnitt "A" entsprechend Fig. 3 zeigt.

Im Einfaßprofil (5) jedes Bodenelementes (BE) an der der jeweils anderen Bodenelementreihe (R1, R2) benachbarten Seite ist in einem Eckbereich des Bodenelementes (BE) die ausklappbare Stütze (3) angeordnet, die in der hochgeschwenkten Nichtgebrauchsstellung jeweils zwischen zwei benachbarten Bodenelementen (BE) vertikal hängt (Fig. 3 und 5).

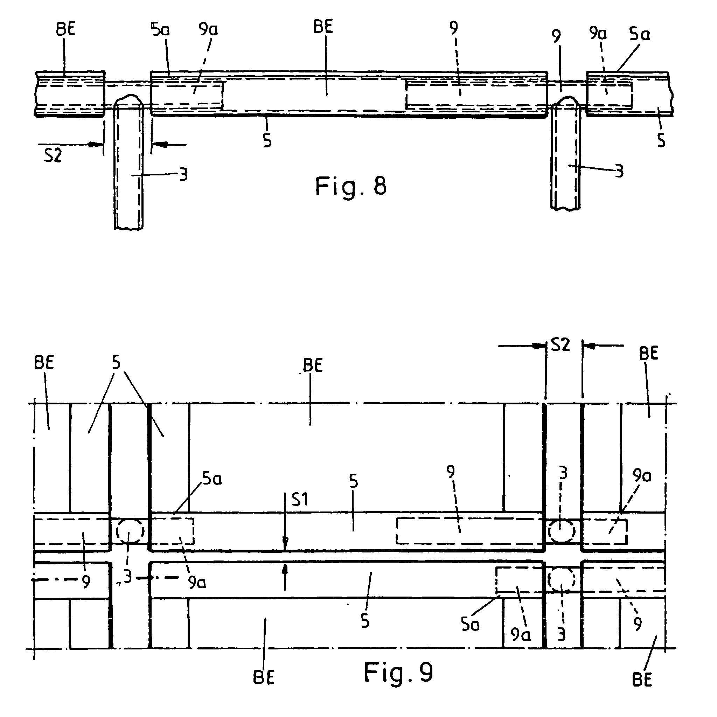

Im Einfaßprofil (5) jedes Bodenelementes (BE) ist für seine Stütze (3) in einem Lagerauge (8) eine horizontale Schwenkachse (9) angeordnet, an welcher die Stütze (3) klappbar lagert und welche mit einem aus dem Bodenelement (BE) herausragenden Achsenteil (9a) ein Abstützteil für das benachbarte, mit seinem eine endseitige Greifklaue (5a) aufweisenden Einfaßprofil (5) über dieses Achsenteil (9a) greifende Bodenelement (BE) bildet (gemäß Ausschnitt "B" in Fig. 3 und gemäß Fig. 7, 8 und 9). Die Schwenkachsen (9) und Lageraugen (8) bilden eine Klapplagerung für jede Stütze (3).

Jede Stütze (3) ist als Rohrbein ausgebildet und hat am unteren Ende einen sich auf einem im Boden (4) des Kofferaufbaus (KA) eingelassenen Fixierblech (10) abstützenden und in ein Fixierblechloch (11) eingreifenden Bundbolzen (12).

Der Bundbolzen (12) setzt sich also aus einem im Querschnitt (Durchmesser) größer als der Stützenquerschnitt ausgebildeten Auflagebund (12a) und einem sich daran nach unten anschließenden Steckzapfen (12b) mit dem Stützendurchmesser entsprechendem oder kleinerem Durchmesser zusammen, der in das Loch (11) der Fixierplatte (10) eingreift.

Unterhalb des Reihenspaltes (S1) ist die Fixierplatte (10) mit jeweils zwei Löchern (11) für zwei gegenüberliegende Bodenelement-Stützen (3) angeordnet und im Boden (4) eingelassen (vgl. Ausschnitt "C" in Fig. 4 entsprechend "C" in Fig. 3).

Jedes Bodenelement (BE) wird in der hochgeschwenkten Nichtgebrauchsstellung durch einen Riegel (13) an der Seitenwand (2) des Kofferaufbaus (KA) lösbar lagearretiert, so daß ein ungewolltes Herunterschwenken ausgeschlossen ist.

Die beiden Bodenelementreihen (R1, R2) ergeben in der Nutzstellung einen die gesamte Breite und Länge des Kofferaufbaus (KA) einnehmenden und durch die Stützen (3) mit Abstand oberhalb des Bodens (4) des Kofferaufbaus (KA) liegenden Zwischenboden.

In der Nichtgebrauchsstellung liegen die hochgeschwenkten Bodenelemente (BE) beider Reihen (R1, R2) an den Seitenwänden (2) an und sind durch die Riegel (13) gesichert.

Zur Bildung des Zwischenbodens werden die Bodenelemente (BE) einzeln und nacheinander in die Horizontale geschwenkt, in dem jeder Riegel (13) jedes Bodenelementes (BE) von Hand gelöst und dann das Bodenelement (BE) nach unten um das seitenwandseitige Schwenklager (SL) geschwenkt wird. Dabei klappt die Stütze (3) selbsttätig um ihre Schwenkachse (9) aus und wird in der vertikalen Stellung dann mit dem Steckzapfen (12b) in das Loch (11) eingesteckt, bis der Bund (12a) auf der Fixierplatte (10) steht und das Bodenelement (BE) in der Horizontalen trägt.

Das nächste, benachbarte heruntergeklappte Bodenelement (BE) wird ebenfalls durch die Stütze (3) an einem Ende abgestützt und greift gleichzeitig mit der Greifklaue (5a) seines anderen Endes über das herausstehende Achsenteil (9a) und stützt sich somit gegenüber dem benachbarten Bodenelement (BE) ab. Jedes Bodenelement (BE) hat somit zwei Abstützungen, und zwar die Beinstütze (3) und die Achsteil-Greifklauenstütze (9a, 5a).

Das Herunterschwenken der Bodenelemente (BE) erfolgt in jeder Reihe (R1, R2) nacheinander vom fahrerhausseitigen Stirnende des Kofferaufbaus (KA) zum Beladeende; zum Hochschwenken wird sinngemäß umgekehrt verfahren, und dabei klappen die Stützen (3) wieder selbsttätig zwischen benachbarte Bodenelemente (BE) ein.

## Patentansprüche

1. Kofferaufbau für einen Lastkraftwagen mit einem Zwischenboden, gebildet durch zwei Reihen (R1, R2) aus jeweils mehreren Bodenelementen (BE), die um eine horizontale Schwenkachse (1) an der der jeweiligen Reihe (R1, R2) benachbarten Seitenwand (2) des Kofferaufbaus (KA) aus einer vertikalen, an der Seitenwand (2) anliegenden Nichtgebrauchsstellung in eine horizontale Nutzstellung schwenkbar sind, in der sie sich einerseits mit jeweils einer ausklappbaren Stütze (3) auf dem Boden des Kofferaufbaus (KA) und andererseits gegeneinander lagefixiert abstützen, **dadurch gekennzeichnet, dass** die Bodenelemente (BE) von Plywoodplatten mit quadratischer oder rechteckiger Grundform und einem umlaufenden Einfassprofil (5) gebildet sind, in dem in einem Lagerauge (8) eine horizontale Schwenkachse (9) angeordnet ist, an welcher die Stütze (3) klappbar lagert, welche als ein Rohrbein ausgebildet ist und am unteren Ende einen sich auf einem im Boden (4) des Kofferaufbaus (KA) eingelassenen Fixierblech (10) abstützenden und in ein Fixierblechloch (11) eingreifenden Bolzen (12) aufweist, und daß die Schwenkachse (9) mit einem aus dem Bodenelement (BE) herausragenden Achsenteil (9a) das benachbarte Bodenelement (BE), das mit einer Greifklaue (5a) seines Einfassprofiles (5) über dieses Achsenteil (9a) greift, abstützt.

2. Kofferaufbau nach Anspruch 1, **dadurch gekennzeichnet, dass** im Einfassprofil (5) jedes Bodenelementes (BE) an der jeweils einer anderen Bodenelementreihe (R1, R2) benachbarten Seite in einem Eckbereich des Bodenelementes (BE) die ausklappbare Stütze (3) angeordnet ist, die in der hochgeschwenkten Nichtgebrauchsstellung jeweils zwischen zwei benachbarten Bodenelementen (BE) vertikal hängt.

3. Kofferaufbau nach Anspruch 1 oder 2, **dadurch gekennzeichnet, dass** die beiden Bodenelementreihen (R1, R2) in der horizontalen Nutzstellung auf der Längenmitte des Kofferaufbaus (KA) mit einem Spalt (S1) zueinander liegen und die Bodenelemente (BE) in jeder Reihe (R1, R2) mit einem Spalt (S2) aneinandergereiht sind.

4. Kofferaufbau nach einem der Ansprüche 1 bis 3, **dadurch gekennzeichnet, dass** alle Bodenelemente (BE) gleiche Grundform und Größe haben.

5. Kofferaufbau nach einem der Ansprüche 1 bis 4, **dadurch gekennzeichnet, dass** das Einfassprofil (5) der Bodenelemente (BE) an der Seitenwand (2) des Kofferaufbaus (KA) durch Schwenklagerungen (SL), die jeweils aus der horizontalen Schwenkachse (1), Lageraugen (6) und Tragwinkeln (7) bestehen, verschwenkbar festgelegt sind.

6. Kofferaufbau nach einem der Ansprüche 1 bis 5, **dadurch gekennzeichnet, dass** jedes Bodenelement (BE) in der hochgeschwenkten Nichtgebrauchsstellung durch einen Riegel (13) an der Seitenwand (2) des Kofferaufbaus (KA) lösbar lagearretiert ist.

7. Kofferaufbau nach einem der Ansprüche 1 bis 6, **dadurch gekennzeichnet, dass** die beiden Bodenelementreihen (R1, R2) in der Nutzstellung einen die gesamte Breite und Länge des Kofferaufbaus (KA) einnehmenden und durch die Stützen (3) mit Abstand oberhalb zum Boden (4) des Kofferaufbaus (KA) getragenen Zwischenboden bilden.

8. Kofferaufbau nach einem der vorstehenden Ansprüche, **dadurch gekennzeichnet, dass** der Bolzen (12) ein Rundbolzen mit einem Auflagebund (12a) und einem sich daran anschließenden Steckzapfen (12b) ist, der in das Fixierblechloch (11) eingreift.

## Claims

1. Box structure for a lorry with an intermediate floor, formed by two rows (R1, R2) each consisting of several floor elements (BE) which can be swivelled about a horizontal swivelling axis (1) at the side wall (2) adjacent to the respective row (R1, R2) of the box structure (KA) from a vertical not-in-use position abutting the side-wall (2) to a horizontal in-use position in which they are supported on the one hand by a swing-out support (3) on the floor of the box structure (KA) and on the other hand fixed in position against each other, **characterized in that** the floor elements (BE) are formed from plywood sheets with a square or rectangular basic shape and a circumferential enclosure profile (5) in which in a bearing eye (8) a horizontal swivel pin (9) is arranged against which the support (3) rests able to be swung out, being developed as a tubular leg and having, at the lower end, a bolt (12), resting on a fixing plate (10) let into the floor (4) of the box structure (KA) and engaging in a hole (11) in the fixing plate, and **in that** the swivel pin (9) supports, with a pin section (9a) projecting from the floor element (BE), the adjacent floor element (BE) which engages over this pin section (9a) with a gripping claw (5a) of its enclosure profile (5).

2. Box structure according to claim 1, **characterized in that**, in the enclosure profile (5) of each floor element (BE) on the side adjacent in each case to another row of floor elements (R1, R2), in a corner area of the floor element (BE) the support (3) able to be swung out is arranged which, in the swung-up not-in-use position, in each case hangs vertically between two adjacent floor elements (BE).

3. Box structure according to claim 1 or 2, **characterized in that** the two rows (R1, R2) of floor elements in the horizontal in-use position lie with a gap (S1) relative to one another on the longitudinal centre of the box structure (KA) and the floor elements (BE) in each row (R1, R2) are ranged alongside one another with a gap (S2).

4. Box structure according to one of claims 1 to 3, **characterized in that** all the floor elements (BE) have the same basic shape and size.

5. Box structure according to one of claims 1 to 4, **characterized in that** the enclosure profile (5) of the floor elements (BE) is attached swivellable at the side wall (2) of the box structure (KA) by swivel bearings (SL) which in each case consist of the horizontal swivel axis (1), bearing eyes (6) and angle supports (7).

6. Box structure according to one of claims 1 to 5, **characterized in that** each floor element (BE) is releasably secured in position in the swung-up not-in-use position by a lock (13) at the side wall (2) of the box structure (KA).

7. Box structure according to one of claims 1 to 6, **characterized in that** the two rows (R1, R2) of floor elements form, in the in-use position, an intermediate floor occupying the whole width and length of the box structure (KA) and carried by the supports (3) with a gap above relative to the floor (4) of the box structure (KA).

8. Box structure according to one of the previous claims, **characterized in that** the bolt (12) is a round bolt with a collar (12a) and an adjoining trunnion (12b) which engages in the hole (11) in the fixing plate.

## Revendications

1. Caisse pour camion comprenant un plancher intermédiaire, formé par deux rangées (R1, R2) de chacune plusieurs éléments de plancher (BE) qui peuvent être pivotés autour d'un axe de pivotement horizontal (1) sur la paroi latérale (2) de la caisse (KA), voisine de la rangée respective (R1, R2), d'une position verticale de non utilisation, portant contre paroi latérale (2), à une position horizontale d'utilisation, dans laquelle ils prennent appui, d'une part, sur le sol de la caisse (KA), au moyen d'un support (3) escamotable, et, d'autre part, l'un contre l'autre, positionnés fixement,
**caractérisé en ce que** les éléments de plancher (BE) sont formés par des plaques de contreplaqué de forme de base carrée ou rectangulaire, et par un profilé d'encadrement (5) continu, lequel est pourvu d'un axe de pivotement horizontal (9), agencé dans un bossage (8), l'appui escamotable un axe de pivotement horizontal (9), axe sur lequel est monté l'appui (3) escamotable, lequel est réalisé sous la forme d'un pied tubulaire et présente à son extrémité inférieure un goujon (12) qui prend appui sur une tôle de fixation (11), encastrée dans le sol (4) de la caisse (KA), et s'engage dans un trou (11) pratiqué dans la tôle de fixation (10), et **en ce que** l'axe de pivotement (9), avec une section d'axe (9a) faisant saillie hors de l'élément de plancher (BE), soutient l'élément de plancher (BE) voisin qui saisit cette section d'axe (9a) au moyen d'une griffe (5a) de son profilé d'encadrement (5).

2. Caisse selon la revendication 1,
**caractérisé en ce que**, dans le profilé d'encadrement (5) de chaque élément de plancher (BE), sur le côté respectivement voisin d'une autre rangée d'éléments de plancher (R1, R2), est agencé, dans une zone d'angle de l'élément de plancher (BE), un support escamotable (3), qui, dans la position de non utilisation relevée, pend verticalement entre deux éléments de plancher (BE) voisins.

3. Caisse selon la revendication 1 ou 2,
**caractérisée en ce que** les deux rangées d'éléments de plancher (R1, R2), dans la position d'utilisation horizontale, sont agencées, au milieu de la longueur de la caisse (KA), avec un interstice (S1) l'une par rapport à l'autre, et que, dans chaque rangée (R1, R2), les éléments de plancher (BE) sont agencés avec un interstice (S2), les uns par rapport aux autres.

4. Caisse selon d'un des revendications 1 à 3,
**caractérisée en ce que** tous les éléments de plancher (BE) ont la même forme de base et la même grandeur.

5. Caisse selon d'un des revendications 1 à 4,
**caractérisée en ce que** le profilé d'encadrement (5) des éléments de plancher (BE) est fixé en pivotement à la paroi latérale (2) de la caisse (KA) par des supports de pivotement (SL) qui sont formés chacun par l'axe de pivotement (1), des bossages (6) et des cornières de support (7).

6. Caisse selon d'un des revendications 1 à 5,
**caractérisée en ce que** chaque élément de plancher (BE), dans la position de non utilisation relevée, est maintenu en position de manière détachable par un verrou (13), à la paroi latérale (2) de la caisse (KA).

7. Caisse selon d'un des revendications 1 à 6,
**caractérisée en ce que** les deux rangées d'éléments de plancher (R1, R2) forment, dans la position d'utilisation, un plancher intermédiaire qui occupe la totalité de la largeur et de la longueur de la caisse (KA), et est porté par les supports (3), au-dessus du plancher (4) de la caisse (KA), à distance de celui-ci.

8. Caisse selon l'une des revendications précédentes,
**caractérisée en ce que** le goujon (12) est un goujon cylindrique avec une collerette d'appui (12a) et un tenon enfichable (12b) y faisant suite, lequel goujon s'engage dans le trou (11) de la tôle de fixation.
